(19) Europäisches Patentamt
European Patent Office
Office européen des brevets

(11) **EP 4 614 000 A1**

(12) **EUROPEAN PATENT APPLICATION**
published in accordance with Art. 153(4) EPC

(43) Date of publication:
**10.09.2025 Bulletin 2025/37**

(21) Application number: **23884337.9**

(22) Date of filing: **31.07.2023**

(51) International Patent Classification (IPC):
**F03D 7/00** $^{(2006.01)}$

(52) Cooperative Patent Classification (CPC):
Y02E 10/76

(86) International application number:
**PCT/CN2023/110228**

(87) International publication number:
**WO 2024/093398 (10.05.2024 Gazette 2024/19)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **31.10.2022 CN 202211365731**

(71) Applicant: **Beijing Goldwind Science & Creation Windpower Equipment Co. Ltd.**
**Beijing 100176 (CN)**

(72) Inventors:
• **WANG, Jinpeng**
**Beijing 100176 (CN)**
• **ZHU, Chuanjiang**
**Beijing 100176 (CN)**
• **LI, Shulin**
**Beijing 100176 (CN)**

(74) Representative: **Hoffmann Eitle**
**Patent- und Rechtsanwälte PartmbB**
**Arabellastraße 30**
**81925 München (DE)**

(54) **CONVERTER BRAKE CONTROL METHOD, CONTROLLER, AND WIND TURBINE**

(57)     A converter brake control method, comprising: in response to a wind turbine triggering a fault shutdown, controlling a converter to enter a brake load-reduction mode, wherein the brake load-reduction mode comprises: controlling a brake circuit of the converter to be closed, and controlling the torque at a rectification side of the converter to be reduced to a preset range; in response to meeting a brake load-reduction mode end condition, controlling the converter to exit the brake load-reduction mode; and controlling a safety chain of the converter to be disconnected. When a wind turbine triggers a fault shutdown, the energy consumption of a brake circuit of a converter is controlled and the torque of the converter is controlled to be reduced to a preset range, so that torque support of a shutdown process can be achieved, and the shutdown load of the wind turbine can be reduced. In addition, the present invention also relates to a controller and a wind turbine.

A converter is controlled to enter a brake load-reduction mode in response to a wind turbine triggering fault shutdown — S101

The converter is controlled to exit the brake load-reduction mode in response to a condition for ending the braking load-reduction mode being satisfied — S102

A safety chain of the converter is controlled to disconnect — S103

**FIG. 1**

**Description**

**FIELD**

The present disclosure generally relates to the technical field of wind power generation, and in particular to a brake control method for a converter of a wind turbine, a controller, and a wind turbine.

**BACKGROUND**

In common shutdown modes for wind turbines, an emergency shutdown mode is generally applied when a main-controller emergency stop fault, a grid fault, or an inverter-unit fault of a converter occur. In the emergency shutdown mode, a main-controller safety chain of the wind turbine is disconnected, a converter blocks a pulse (that is, the converter is disabled), an inverter-side (grid-side) circuit breaker and a rectifier-side (machine-side) circuit breaker are disconnected, and the braking shutdown of the wind turbine is independently completed by a pitch system. When fault shutdown of the wind turbine is triggered, the converter immediately blocks the pulse, causing an executing torque thereof to drop directly from a current torque to zero. In such case, the wind turbine is affected by a load rejection. Especially when the wind turbine in operation under a high power triggers the fault shutdown, the blade roots and tower base will endure significant impact loads, thereby reducing the performance of the wind turbine and producing a potential risk in the long-term safe operation of the wind turbine. Moreover, during the development of new wind turbine models, if shutdown is performed to conduct load assessment in the emergency shutdown mode, problems such as component selection difficulties and increased costs for the wind turbines caused by blade-root loads or tower-base bending moment limit load exceeding a limit.

**SUMMARY**

In view of this, a brake control method for a converter, a controller, and a wind turbine are provided according to embodiments of the present disclosure. When fault shutdown is triggered in the wind turbine, a braking circuit of the converter is controlled to consume energy and a torque of the converter is controlled to reduce to a preset range, thereby achieving torque support during a shutdown process and reducing a shutdown load of the wind turbine.

In a first aspect, a brake control method for a converter of a wind turbine is provided. The brake control method for the converter includes: controlling the converter to enter a brake load-reduction mode in response to the wind turbine triggering fault shutdown, where the brake load-reduction mode comprises: controlling a braking circuit of the converter to close and controlling a rectifier-side torque of the converter to reduce to a preset range; controlling the converter to exit the brake load-reduction mode in response to a condition for ending the brake load-reduction mode being satisfied; and controlling a safety chain of the converter to disconnect.

In a second aspect, a computer-readable storage medium storing a computer program is provided. The brake control method for the converter is implemented when the computer program is executed by a processor.

In a third aspect, a controller is provided. The controller includes a processor and a memory storing a computer program. The brake control method for the converter is implemented when the computer program is executed by the processor.

In a fourth aspect, a wind turbine generator system is provided. The wind turbine generator system includes the controller.

According to the brake control method for a converter, the controller, and the wind turbine in embodiments of the present disclosure, when shutdown is triggered in the wind turbine due to a main-controller fault, a grid fault, or an inverter-side fault, a rectifier-side circuit breaker of the converter is controlled to close and an inverter-side circuit breaker of the converter is controlled to open, and a braking circuit of the converter is controlled to consume energy and a torque of the converter is controlled to reduce to a preset range, thereby effectively avoiding an impact load during a shutdown process, ensuring safe shutdown of the wind turbine and enhancing safety performance of the wind turbine.

Moreover, according to the brake control method for the converter, the controller, and the wind turbine in embodiments of the present disclosure, blade-root loads and tower-base bending moment limit loads during the development of new wind turbine models are effectively reduced, and problems of component selection difficulties and increased costs for the wind turbine due to load exceeding a limit are alleviated. In addition, according to the brake control method for the converter, the controller, and the wind turbine in embodiments of the present disclosure, it is not required to increase hardware costs for the wind turbine and it is easy to promote and apply.

**BRIEF DESCRIPTION OF THE DRAWINGS**

The above and other objectives and features of embodiments of the present disclosure will be more clarified from the following description of embodiments in connection with the accompanying drawings. In the drawings:

FIG. 1 is a flowchart of a brake control method for a converter of a wind turbine according to an embodiment of the present disclosure;

FIG. 2 is a schematic diagram showing an example of a brake control method for a converter of a wind turbine according to an embodiment of the present disclosure; and

FIG. 3 is a block diagram of a controller according to an embodiment of the present disclosure.

## DETAILED DESCRIPTION

Specific implementation methods are provided below to help readers to gain a comprehensive understanding of the method, device, and/or system described herein. After understanding the present disclosure, various changes, modifications, and equivalents of the method, device, and/or system described herein would be clear. For example, an order of operations described herein is only an example and is not limited to those described herein, but may be changed as would be clear after understanding the present disclosure, except for operations that must occur in a specific order. In addition, descriptions of features known in the art may be omitted for clarity and conciseness.

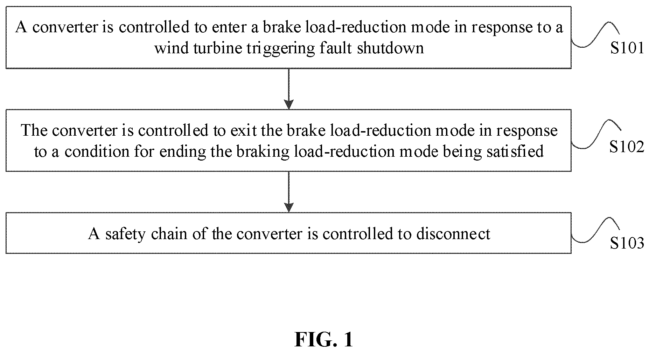

The embodiments of the present disclosure are described in detail below with reference to FIG. 1 to FIG. 3.

FIG. 1 is a flowchart of a brake control method for a converter of a wind turbine according to an embodiment of the present disclosure. The brake control method for a converter is implemented by a converter controller, a main controller of the wind turbine, or another dedicated controller.

Referring to FIG. 1, in step S101, in response to the wind turbine triggering fault shutdown, the converter is controlled to enter a brake load-reduction mode. Hereinafter, the brake load-reduction mode is referred to as an R-Safe mode. The R-Safe mode includes: controlling a braking circuit of the converter to close and controlling a rectifier-side torque (such as a rectifier-side reference torque transmitted by the main controller of the wind turbine) of the converter to reduce to a preset range (such as a range of 0 to 1% of a rated torque, which is not limited in the present disclosure). The braking circuit of the converter may be implemented using various conventional technologies, which will not be repeated here.

According to an embodiment of the present disclosure, not all fault types are applicable to the R-Safe mode when the fault shutdown is triggered in the wind turbine. Table 1 shows a list of fault types applicable to the R-Safe mode. The main controller of the wind turbine can identify the various types listed in Table 1 and provide an identification result to a controller (such as a converter controller or another dedicated controller) implementing the brake control method for the converter. Therefore, a flag indicating a fault type is added to the communication protocol between the main controller of the wind turbine and the converter controller or another dedicated controller.

Table 1

| Serial number | Fault name/type | Remarks |
|---|---|---|
| 1 | Grid Fault | High peak value of a grid voltage, high grid frequency, low grid frequency, high voltage ride-through, low voltage ride-through, grid-side phase loss, voltage harmonic over-protection |
| 2 | Insulated Gate Bipolar Transistor (IGBT) uneven current fault in an inverter-side (grid-side) of a converter | |
| 3 | IGBT over-temperature protection in an inverter-side (grid-side) of a converter | Absolute temperature protection |
| 4 | Current control abnormality protection in an inverter-side (grid-side) of a converter | |
| 5 | Filter capacitor overload protection in an inverter-side (grid-side) of a converter | |
| 6 | Filter capacitor contactor close/open failure in an inverter-side (grid-side) of a converter | Such as a grid-side fan fault, an over-temperature fault |

(continued)

| Serial number | Fault name/type | Remarks |
|---|---|---|
| 7 | Main-controller fault | |

As shown in Table 1, both the main-controller fault and the grid fault are applicable to the R-Safe mode, while the converter faults may be divided into faults applicable to the R-Safe mode (for example, but not limited to, inverter-side faults of the converter) and faults not applicable to the R-Safe mode (for example, but not limited to, rectifier-side faults of the converter). Therefore, step S101 may include: in response to the wind turbine triggering the fault shutdown, determining a fault type; and in response to the fault type indicating the main-controller fault of the wind turbine or a grid fault, controlling the converter to enter the R-Safe mode. For example, information related to the fault type may be received from the main controller of the wind turbine. More specifically, step S101 may further include: in response to the fault type indicating a converter fault, determining whether the converter fault belongs to a fault applicable to the R-Safe mode; in response to the converter fault belonging to a fault applicable to the R-Safe mode, controlling the converter to enter the R-Safe mode; and in response to the converter fault not belonging to a fault applicable to the R-Safe mode, controlling a safety chain of the converter to disconnect. As shown in Table 1, when the converter fault is an inverter-side fault of the converter, it can be determined that the converter fault belongs to the fault applicable to the R-Safe mode.

According to an embodiment of the present disclosure, to more effectively achieve load reduction, the R-Safe mode may further include: controlling a rectifier-side power module of the converter to maintain modulation and controlling a rectifier-side circuit breaker of the converter to close, and controlling an inverter-side power module of the converter to stop modulation and controlling an inverter-side circuit breaker of the converter to open.

In step S102, in response to a condition for ending the brake load-reduction mode being satisfied, the converter is controlled to exit the brake load-reduction mode. According to an embodiment of the present disclosure, the condition for ending the brake load-reduction mode includes the rectifier-side torque of the converter reducing to the preset range (for example, but not limited to, the aforementioned range of 0 to 1% of the rated torque) and a rectifier-side active power of the converter being less than a preset power threshold (for example, but not limited to, 0.5% * a rated active power). Here, due to a communication delay (that is, a delay between a transmitted torque and an executing torque), in order to accurately determine whether load reduction is completed, it is necessary to simultaneously determine whether the rectifier-side torque of the converter has reduced to the preset range and whether the rectifier-side active power of the converter is less than the preset power threshold. In other words, by performing determination on both the rectifier-side torque reduction of the converter and the rectifier-side active power of the converter, the reliability of determining whether the load reduction is completed may be improved. Moreover, when controlling the converter to exit the brake load-reduction mode, the rectifier-side power module of the converter may be controlled to stop modulation and the rectifier-side circuit breaker of the converter may be controlled to open, and then the converter is controlled to exit the brake load-reduction mode.

Detailed description of controlling the rectifier-side torque of the converter to reduce to the preset range is made as follows. In an embodiment, the controlling the rectifier-side torque of the converter to reduce to the preset range may include: controlling the rectifier-side torque of the converter to reduce to the preset range with a constant slope, with a variable-slope, or in a jumping manner.

For controlling the rectifier-side torque of the converter to reduce to the preset range with a constant slope, the constant slope is determined based on a rectifier-side torque of the converter at a time instant when the converter is controlled to enter the brake load-reduction mode, a desired time period for controlling the rectifier-side torque of the converter to reduce to the preset range, and the number of calculations per unit time. The desired time for controlling the rectifier-side torque of the converter to reduce to the preset range may be preset by those skilled in the art according to actual requirements. For example, the desired time period may be 2.5 seconds or 5 seconds, which is not limited in the present disclosure. The number of calculations per unit time refers to the number of calculations of a controller/chip implementing the brake control method for the converter of the wind turbine within a unit time (for example, the number of calculations within 1 second). In such case, if the torque is controlled to reduce to a value of 0 within the preset range, a step size by which the rectifier-side torque of the converter reduces in each calculation may be calculated based on equation (1).

$$\Delta T \ = \ \frac{T_{ref\_0}}{t_{des} \ \times \ Cal\_cnts} \quad (1)$$

In equation (1), $\Delta T$ represents the step size by which the rectifier-side torque of the converter reduces in each calculation, $T_{rej0}$ represents the rectifier-side torque of the converter at the time instant when the converter is controlled to enter the brake load-reduction mode, $t_{des}$ represents the desired time period for controlling the rectifier-side torque of the converter to reduce to 0, and *Cal _cnts* represents the number of calculations per unit time. Thus, through reducing the rectifier-side torque of the converter by $\Delta T$ in each calculation, the rectifier-side torque of the converter may be controlled to reduce to 0 with the constant slope. In an embodiment, if the torque is controlled to reduce to a non-zero value within the preset range, the step size $\Delta T$ by which the rectifier-side torque of the converter reduces in each calculation may be calculated by simply modifying equation (1). For example, a numerator $T_{ref0}$ may be changed to $T_{ref0}$-A, where A may be any value within the preset range.

For controlling the rectifier-side torque of the converter to reduce to the preset range with the variable slope, step sizes by which the rectifier-side torque of the converter reduces in respective calculations may be modified to different values.

For controlling the rectifier-side torque of the converter to reduce to the preset range in a jumping manner, the rectifier-side torque of the converter may be maintained unchanged until the desired time period for controlling the rectifier-side torque of the converter to reduce to the preset range has passed, and the rectifier-side torque of the converter may be controlled to jump to a value within the preset range at a time instant when the desired time period of controlling the rectifier-side torque of the converter to reduce to the preset range has passed.

After completing the load reduction and exiting the R-Safe mode, in step S103, the safety chain of the converter is controlled to disconnect. The controlling the safety chain of the converter to disconnect means that the converter stops operating, and the brake control method for the converter ends. Thereafter, the wind turbine may finally shut down.

According to an embodiment of the present disclosure, the brake control method for the converter may further include: in response to the fault type indicating the main-controller fault of the wind turbine, the grid fault, or the converter fault belonging to the fault applicable to the brake load-reduction mode, determining whether the safety chain of the converter is disconnected after a preset time period has passed; and in response to determining that the safety chain of the converter is not disconnected, controlling the safety chain of the converter to disconnect. Here, the preset time period is determined based on the desired time period for controlling the rectifier-side torque of the converter to reduce to the preset range. For example, the preset time period may be equal to or greater than the desired time period for controlling the rectifier-side torque of the converter to reduce to the preset range. Since the execution of the R-Safe mode may encounter abnormalities (such as, failure to enter the R-Safe mode, failure to effectively execute the R-Safe mode after entering the R-Safe mode, failure to effectively end/exit the R-Safe mode), causing the safety chain of the converter to fail to disconnect after the preset time period has passed since the converter should have entered the brake load-reduction mode, the above steps may be added, so as to prevent the failure to execute the R-Safe mode, the failure to exit the R-Safe mode, and a risk of failure of the braking circuit due to the braking circuit being in operation for a long time.

In an embodiment, in order to maintain operation of the rectifier-side of the converter when the fault shutdown is triggered in the wind turbine, the hardware safety chain of the wind turbine may be adjusted by removing a coupling (hardware) node between a main-controller safety chain and a converter safety chain of the wind turbine. In other words, the disconnection of the main-controller safety chain cannot trigger the disconnection of the converter safety chain through the coupling (hardware) node, thereby maintaining the operation of the rectifier-side of the converter in the event of a main-controller fault to achieve effective load reduction.

According to the brake control method for a converter of a wind turbine in the embodiments of the present disclosure, when the shutdown is triggered in the wind turbine due to a main-controller fault, a grid fault, or an inverter-side fault of the converter, a rectifier-side circuit breaker of the converter is controlled to close and an inverter-side circuit breaker of the converter is controlled to open, and a braking circuit of the converter is controlled to consume energy and a torque of the converter is controlled to reduce to a preset range, thereby effectively avoiding an impact load during a shutdown process, ensuring safe shutdown of the wind turbine and enhancing safety performance of the wind turbine.

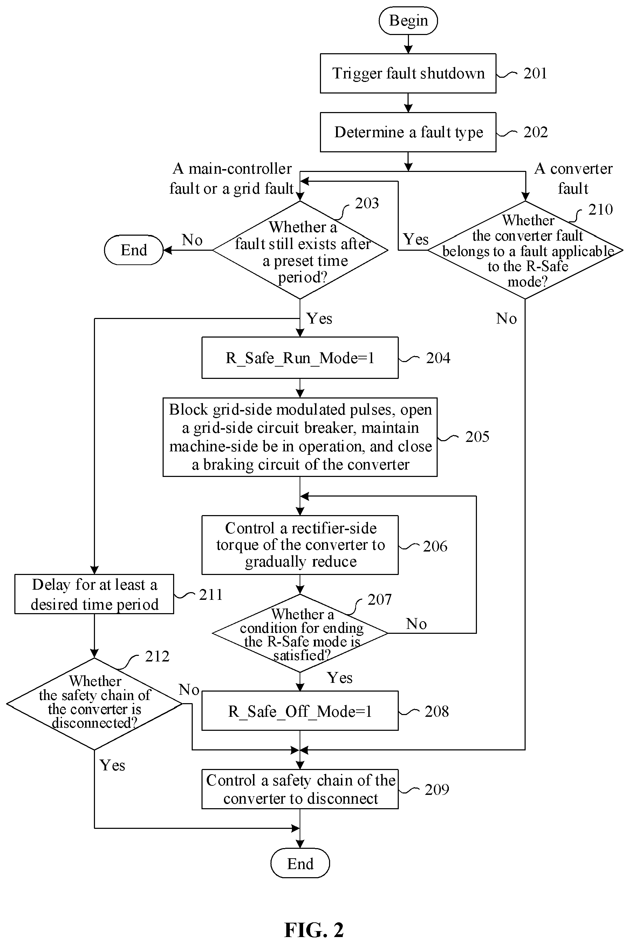

FIG. 2 is a schematic diagram showing an example of a brake control method for a converter of a wind turbine according to an embodiment of the present disclosure.

Referring to FIG. 2, in step 201, the wind turbine triggers fault shutdown. In step 202, a fault type is determined. As mentioned above, the brake control method for the converter may be implemented by a converter controller, a main controller of the wind turbine, or another dedicated controller.

If the fault type indicates a main-controller fault of the wind turbine or a grid fault, in step 203, it is determined whether the fault still exists after a preset time period has passed. If the fault still exists, an R_Safe_Run_Mode flag is set to 1 in step 204. Otherwise, the brake control method for the converter is ended. Due to a communication delay between controllers (for example, between the main controller and the converter controller), by determining whether the fault still exists after the preset time period has passed, a false trigger caused by communication abnormalities may be avoided. According to an embodiment of the present disclosure, the preset time period may be equal to or greater than a communication delay time period, for example, the preset time period may be equal to or greater than 40ms, but is not limited to this. Moreover, setting the R_Safe_Run_Mode flag to 1 indicates that the converter enters the R-Safe mode.

In step 205, a grid-side (that is, inverter-side) modulated pulse of the converter is blocked, the grid-side circuit breaker is opened, machine-side (that is, the rectifier-side) operation of the converter is maintained, and the braking circuit of the converter is closed. In step 206, the rectifier-side torque of the converter is controlled to gradually reduce. As mentioned above, the rectifier-side torque of the converter may be controlled to gradually reduce with a constant slope, with a variable slope, or in a jumping manner. In an embodiment, in the R-Safe mode, the main controller of the wind turbine may control a pitch system to execute feathering in a shortest time. Moreover, in the R-Safe mode, the main controller of the wind turbine may withdraw an inverter-side (grid-side) modulation command, maintain a rectifier-side (machine-side) modulation command, maintain a reference torque value, and withdraw the rectifier-side (machine-side) modulation command and the reference torque value at the end of the R-Safe mode.

In step 207, it is determined whether a condition for ending the R-Safe mode is satisfied, that is, whether the rectifier-side torque of the converter has reduced to the preset range and whether the rectifier-side active power of the converter is less than the preset power threshold. For example, it may be determined whether the rectifier-side torque of the converter has reduced to 0 and whether the rectifier-side active power of the converter is less than 0.5% * the rated active power. If the condition for ending the R-Safe mode is satisfied, the brake control method for the converter proceeds to step 208; otherwise, the brake control method for the converter returns to step 206. In step 208, after the preset time period has passed, the R_Safe_Off_Mode flag is set to 1. The preset time period may be equal to or greater than the communication delay time. Setting the R_Safe_Off_Mode flag to 1 indicates that the converter exits the R-Safe mode (that is, the R-Safe mode ends).

When the condition for ending the R-Safe mode is satisfied, the machine-side modulated pulses of the converter may be blocked, and the machine-side circuit breaker may be opened. Moreover, when the R_ Safe Off Mode flag is set to 1, in step 209, the safety chain of the converter is controlled to disconnect. Thus, after the R-Safe mode ends, the converter stops operating and the brake control method for the converter ends. Then, the wind turbine completes the shutdown. The time instant when the wind turbine completes the shutdown may be the later one of the time instant when the pitch system completes the feathering shutdown and the time instant when the safety chain of the converter is disconnected.

In an embodiment, if the fault type indicates a converter fault, in step 210, it is determined whether the converter fault belongs to a fault applicable to the R-Safe mode. If the converter fault belongs to a fault applicable to the R-Safe mode, the brake control method for the converter proceeds to step 203 to determine whether the fault still exists after the preset time period has passed. If the converter fault does not belong to a fault applicable to the R-Safe mode, it means that the converter cannot enter the R-Safe mode. In this case, the brake control method for the converter proceeds to step 209 to control the safety chain of the converter to disconnect.

In an embodiment, if the fault (including the main-controller fault, the grid fault, and the converter fault applicable to the R-Safe mode) still exists after the preset time period has passed, a delay is executed in step 211. For example, delay may be at least performed on the desired time period for controlling the rectifier-side torque of the converter to reduce to the preset range (for example, but not limited to 0). Then, in step 212, it is determined whether the safety chain of the converter is disconnected. If the safety chain of the converter has already been disconnected, the brake control method for the converter ends. If the safety chain of the converter has not been disconnected, the brake control method for a converter of a wind turbine proceeds to step 209 to control the safety chain of the converter to disconnect.

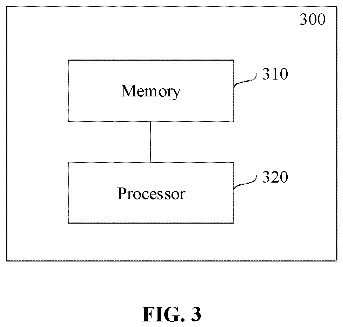

FIG. 3 is a block diagram of a controller according to an embodiment of the present disclosure. The controller may be implemented as the converter controller of the wind turbine, or as the main controller of the wind turbine or another dedicated controller.

Referring to FIG. 3, the controller 300 according to the embodiments of the present disclosure includes a processor 310 and a memory 320. The processor 310 may include (but is not limited to) a central processing unit (CPU), a digital signal processor (DSP), a microcomputer, a field-programmable gate array (FPGA), a system on chip (SoC), a microprocessor, an application-specific integrated circuit (ASIC), and the like. The memory 320 may store a computer program to be executed by the processor 310. The memory 320 may include a high-speed random-access memory and/or a non-volatile computer-readable storage medium. When the processor 310 executes the computer program stored in the memory 320, the brake control method for a converter of a wind turbine as described above may be implemented.

In an embodiment, the controller 300 may communicate with various other components in the wind turbine via wired or wireless communication, and may communicate with other apparatuses in a wind farm (such as a main controller of the wind farm) via wired or wireless communication. In addition, the controller 300 may communicate with apparatuses outside the wind farm via wired or wireless communication.

The brake control method for a converter of a wind turbine according to the embodiments of the present disclosure may be written as a computer program and stored on a computer-readable storage medium. When the computer program is executed by a processor, the brake control method for a converter of a wind turbine as described above may be implemented. Examples of the computer-readable storage medium include: a read-only memory (ROM), a random-access programmable read-only memory (PROM), an electrically erasable programmable read-only memory (EEPROM), a random-access memory (RAM), a dynamic random-access memory (DRAM), a static random-access memory (SRAM), a flash memory, a non-volatile memory, a CD-ROM, a CD-R, a CD+R, a CD-RW, a CD+RW, a DVD-ROM, a DVD-R, a DVD+R, a DVD-RW, a DVD+RW, a DVD-RAM, a BD-ROM, a BD-R, a BD-R LTH, a BD-RE, a Blu-ray or optical disc storage, a hard disk drive (HDD), a solid-state drive (SSD), a card storage (such as a multimedia card, a secure digital (SD) card, or an extreme digital (XD) card), a magnetic tape, a floppy disk, a magneto-optical data storage device, an optical data storage device, a hard disk, a solid-state disk, and any other device configured to store computer programs and any associated data, data files, and data structures in a non-transitory manner and to provide the computer programs and any associated data, data files, and data structures to a processor or computer so that the processor or computer can execute the computer programs. In one example, the computer programs and any associated data, data files, and data structures are distributed across networked computer systems so that the computer programs and any associated data, data files, and data structures are stored, accessed, and executed by one or more processors or computers in a distributed manner.

A wind turbine is provided according to the embodiments of the present disclosure. The wind turbine includes the controller.

According to the brake control method for a converter, the controller, and the wind turbine in embodiments of the present disclosure, when shutdown is triggered in the wind turbine due to a main-controller fault, a grid fault, or an inverter-side fault of the converter, a rectifier-side circuit breaker of the converter is controlled to close and an inverter-side circuit breaker of the converter is controlled to open, and a braking circuit of the converter is controlled to consume energy and a torque of the converter is controlled to reduce to a preset range, thereby effectively avoiding an impact load during a shutdown process, ensuring a safe shutdown of the wind turbine and enhancing safety performance of the wind turbine.

Moreover, according to the brake control method for a converter, the controller, and the wind turbine in embodiments of the present disclosure, blade-root loads and tower-base bending moment limit loads during the development of new wind turbine models are effectively reduced, and problems of component selection difficulties and increased costs for the wind turbine due to loads exceeding a limit are alleviated. In addition, according to the brake control method for a converter, the controller, and the wind turbine in embodiments of the present disclosure, it is not required to increase hardware costs for the wind turbine and it is easy to promote and apply.

Although some embodiments of the present disclosure have been illustrated and described, those skilled in the art should understand that modifications can be made to these embodiments without departing from the principles and spirit of the present disclosure, which are defined by the claims and equivalents thereof.

## Claims

1. A brake control method for a converter of a wind turbine, comprising:

   controlling the converter to enter a brake load-reduction mode in response to the wind turbine triggering fault shutdown, wherein the brake load-reduction mode comprises: controlling a braking circuit of the converter to close and controlling a rectifier-side torque of the converter to reduce to a preset range;
   controlling the converter to exit the brake load-reduction mode in response to a condition for ending the brake load-reduction mode being satisfied; and
   controlling a safety chain of the converter to disconnect.

2. The brake control method according to claim 1, wherein the controlling the converter to enter a brake load-reduction mode in response to the wind turbine triggering fault shutdown comprises:

   determining a fault type in response to the wind turbine triggering the fault shutdown; and
   controlling the converter to enter the brake load-reduction mode in response to the fault type indicating a main-controller fault of the wind turbine or a grid fault.

3. The brake control method according to claim 2, wherein the controlling the converter to enter a brake load-reduction mode in response to the wind turbine triggering fault shutdown further comprises:

   in response to the fault type indicating a converter fault, determining whether the converter fault belongs to a fault applicable to the brake load-reduction mode;
   in response to the converter fault belonging to the fault applicable to the brake load-reduction mode, controlling the converter to enter the brake load-reduction mode; and
   in response to the converter fault not belonging to the fault applicable to the brake load-reduction mode, controlling the safety chain of the converter to disconnect.

4. The brake control method according to claim 3, wherein the converter fault is determined to belong to the fault applicable to the brake load-reduction mode in response to the converter fault being an inverter-side fault of the converter.

5. The brake control method according to claim 1, wherein the condition for ending the brake load-reduction mode comprises the rectifier-side torque of the converter reducing to the preset range and a rectifier-side active power of the converter being less than a preset power threshold.

6. The brake control method according to claim 1, wherein the brake load-reduction mode further comprises: controlling a rectifier-side power module of the converter to maintain modulation and controlling a rectifier-side circuit breaker of the converter to close, and controlling an inverter-side power module of the converter to stop modulation and controlling an inverter-side circuit breaker of the converter to open.

7. The brake control method according to claim 6, wherein the controlling the converter to exit the brake load-reduction mode comprises: in response to the condition for ending the brake load-reduction mode being satisfied, controlling the rectifier-side power module of the converter to stop modulation and controlling the rectifier-side circuit breaker of the converter to open, and controlling the converter to exit the brake load-reduction mode.

8. The brake control method according to claim 1, wherein the controlling a rectifier-side torque of the converter to reduce to a preset range comprises: controlling the rectifier-side torque of the converter to reduce to the preset range with a constant slope, with a variable slope, or in a jumping manner.

9. The brake control method according to claim 8, wherein the constant slope is determined based on a rectifier-side torque of the converter at a time instant when the converter is controlled to enter the brake load-reduction mode, a desired time period for controlling the rectifier-side torque of the converter to reduce to the preset range, and a number of calculations per unit time.

10. The brake control method according to claim 8, wherein the controlling the rectifier-side torque of the converter to reduce to the preset range in a jumping manner comprises: maintaining the rectifier-side torque of the converter unchanged until the desired time period for controlling the rectifier-side torque of the converter to reduce to the preset range has passed, and controlling the rectifier-side torque of the converter to jump to a value within the preset range at a time instant when the desired time period of controlling the rectifier-side torque of the converter to reduce to the preset range has passed.

11. The brake control method according to claim 3, further comprising:

    in response to the fault type indicating the main-controller fault of the wind turbine, the grid fault, or the converter fault belonging to the fault applicable to the brake load-reduction mode, determining whether the safety chain of the converter is disconnected after a preset time period has passed; and
    in response to determining that the safety chain of the converter is not disconnected, controlling the safety chain of the converter to disconnect.

12. The brake control method according to claim 11, wherein the preset time period is determined based on the desired time period for controlling the rectifier-side torque of the converter to reduce to the preset range.

13. A computer-readable storage medium storing a computer program, wherein the brake control method for the converter according to any one of claims 1 to 12 is implemented when the computer program is executed by a processor.

14. A controller, comprising:

    a processor; and
    a memory storing a computer program, wherein the brake control method for the converter according to any one of claims 1 to 12 is implemented when the computer program is executed by the processor.

15. A wind turbine, comprising the controller according to claim 14.

A converter is controlled to enter a brake load-reduction mode in response to a wind turbine triggering fault shutdown

S101

The converter is controlled to exit the brake load-reduction mode in response to a condition for ending the braking load-reduction mode being satisfied

S102

A safety chain of the converter is controlled to disconnect

S103

**FIG. 1**

FIG. 2

300

Memory 310

Processor 320

**FIG. 3**

## INTERNATIONAL SEARCH REPORT

| | International application No. |
|---|---|
| | **PCT/CN2023/110228** |

### A. CLASSIFICATION OF SUBJECT MATTER

F03D7/00(2006.01)i

According to International Patent Classification (IPC) or to both national classification and IPC

### B. FIELDS SEARCHED

Minimum documentation searched (classification system followed by classification symbols)

F03D

Documentation searched other than minimum documentation to the extent that such documents are included in the fields searched

Electronic data base consulted during the international search (name of data base and, where practicable, search terms used)

CNTXT; CNABS; DWPI; VEN; CNKI: 变流器, 制动, 刹车, 闭合, 转矩, 断开, converter, inverter, transformer, brake, detent, close, torque, break, disconnect

### C. DOCUMENTS CONSIDERED TO BE RELEVANT

| Category* | Citation of document, with indication, where appropriate, of the relevant passages | Relevant to claim No. |
|---|---|---|
| PX | CN 116265734 A (BEIJING GOLDWIND SCIENCE & CREATION WINDPOWER EQUIPMENT CO., LTD.) 20 June 2023 (2023-06-20)<br>claims 1-15 | 1-15 |
| X | CN 111835031 A (CSIC HAIZHUANG WINDPOWER CO., LTD.) 27 October 2020 (2020-10-27)<br>description, paragraphs 31-48, and figure 1 | 1-15 |
| A | CA 2724601 A1 (MITSUBISHI HEAVY INDUSTRIES, LTD.) 26 February 2012 (2012-02-26)<br>entire document | 1-15 |
| A | CN 112761874 A (XEMC WINDPOWER CO., LTD.) 07 May 2021 (2021-05-07)<br>entire document | 1-15 |
| A | JP 2018096236 A (LIXIL CORP.) 21 June 2018 (2018-06-21)<br>entire document | 1-15 |
| A | US 2015214726 A1 (DELTA ELECTRONICS, INC.) 30 July 2015 (2015-07-30)<br>entire document | 1-15 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **07 November 2023** | **17 November 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/110228**

| Patent document cited in search report | | | Publication date (day/month/year) | Patent family member(s) | | | Publication date (day/month/year) |
|---|---|---|---|---|---|---|---|
| CN | 116265734 | A | 20 June 2023 | None | | | |
| CN | 111835031 | A | 27 October 2020 | None | | | |
| CA | 2724601 | A1 | 26 February 2012 | WO | 2012026014 | A1 | 01 March 2012 |
| | | | | KR | 20120088526 | A | 08 August 2012 |
| | | | | KR | 101303404 | B1 | 05 September 2013 |
| | | | | AU | 2010257198 | A1 | 15 March 2012 |
| | | | | CA | 2724601 | C | 29 October 2013 |
| | | | | JP | 5244923 | B2 | 24 July 2013 |
| | | | | JPWO | 2012026014 | A1 | 28 October 2013 |
| | | | | US | 2012049517 | A1 | 01 March 2012 |
| | | | | US | 8299650 | B2 | 30 October 2012 |
| | | | | EP | 2610486 | A1 | 03 July 2013 |
| | | | | EP | 2610486 | A4 | 11 June 2014 |
| | | | | EP | 2610486 | B1 | 10 August 2016 |
| CN | 112761874 | A | 07 May 2021 | None | | | |
| JP | 2018096236 | A | 21 June 2018 | JP | 6765760 | B2 | 07 October 2020 |
| US | 2015214726 | A1 | 30 July 2015 | US | 9470211 | B2 | 18 October 2016 |

Form PCT/ISA/210 (patent family annex) (July 2022)